# EUROPÄISCHE PATENTSCHRIFT

(11) **EP 4 514 631 B1**
(45) Veröffentlichungstag und Bekanntmachung des Hinweises auf die Patenterteilung: **11.03.2026**
(21) Anmeldenummer: 23723129.5
(22) Anmeldetag: 26.04.2023
(51) Int. Cl.: B60C 11/04, B60C 11/12, B60C 11/03

(54) **FAHRZEUGLUFTREIFEN**
PNEUMATIC TYRE FOR A VEHICLE
PNEU POUR VÉHICULE

(30) Priorität: 29.04.2022 DE 102022204217
(43) Veröffentlichungstag der Anmeldung: 05.03.2025
(73) Patentinhaber: Continental Reifen Deutschland GmbH, 30175 Hannover (DE)
(72) Erfinder: BEHR, Ulrich, 30175 Hannover (DE); HERBST, Stephan, 30175 Hannover (DE); KHOO, Jan-Sen, 30175 Hannover (DE)
(74) Vertreter: Continental Corporation
(86) Internationale Anmeldenummer: PCT/DE2023/200082
(87) Internationale Veröffentlichungsnummer: WO 2023/208301

(56) Entgegenhaltungen:
- EP-A1- 3 888 950
- DE-T5- 112014 002 382
- JP-A- 2009 006 771

## Beschreibung

Die Erfindung betrifft einen Fahrzeugluftreifen mit einem Laufstreifen mit zumindest einer in Umfangsrichtung umlaufenden, an zumindest einer Seite von einer Umfangsrille begrenzten Profilrippe mit einer an der Laufstreifenperipherie befindlichen Außenfläche und mit insbesondere parallel zueinander verlaufenden Querrillen, welche in einem Abstand vor der Umfangsrille enden, wobei zwischen der Umfangsrille und den Querrillen eine Reihe von sich in Umfangsrichtung erstreckenden, in Draufsicht insgesamt bogenförmigen Einschnitten verläuft, deren Wölbungen zur Umfangsrille weisen, wobei die bogenförmigen Einschnitte eine in die Umfangsrichtung projizierte Erstreckungslänge von 30,00 mm bis 100,00 mm sowie eine Bogenform mit einer maximalen Auslenkung aufweisen, die bezogen auf die Bogensehne 2,00 mm bis 6,00 mm beträgt.

Ein derartiger Fahrzeugluftreifen ist beispielsweise aus der EP 3 888 950 A1 bekannt. Dieser Fahrzeugluftreifen weist einen Laufstreifen mit einer von einer Umfangsrille begrenzten, schulterseitigen Profilrippe auf, welche mit vor der Umfangsrille endenden Querrillen versehen ist. Im Bereich zwischen der Umfangsrille und den Querrillen sind sich in Umfangsrichtung erstreckende, in Draufsicht bogenförmig verlaufende Einschnitte mit einer in Umfangsrichtung projizierten Länge von 25,00 mm bis 65,00 mm sowie einer Bogenform mit einer auf die Bogensehne bezogenen, maximalen Auslenkung von 0,80 mm bis 2,00 mm ausgebildet. Dieser Fahrzeugreifen soll eine gute Wasserableitung in Richtung Außenschulterbereich aufweisen.

Die EP 3 888 949 A1 offenbart einen Fahrzeugluftreifen mit einem Laufstreifen mit einer schulterseitigen Profilrippe, die durch Quereinschnitte, Querrillen und in Umfangsrichtung bogenförmig verlaufende Einschnitte in blockartige Rippenelemente gegliedert ist. Die Quereinschnitte enden laufstreifeninnenseitig innerhalb der Profilrippe und münden in Querrillen, welche bis über die Breite des Laufstreifens in der Bodenaufstandsfläche hinaus verlaufen. Die bogenförmigen Einschnitte verbinden die laufstreifeninnenseitigen Enden bzw. Endabschnitte der in Umfangsrichtung aufeinanderfolgenden Quereinschnitte 3, die Wölbung der Bogenform weist zu jener Umfangsrille, welche die Profilrippe laufstreifeninnenseitig begrenzt. An die Quereinschnitte schließt außerhalb der Bodenaufstandsfläche, also im Außenschulterbereich, jeweils eine langgestreckte Vertiefung an, um im Außenschulterbereich auf weichem Untergrund eine verbesserte Griffperformance, insbesondere bei Kurvenfahrt, sicherzustellen.

Aus der EP 3 181 378 A1 sowie der DE 10 2009 044 361 A1 sind Fahrzeugluftreifen mit Laufstreifen bekannt, welche schulterseitig Profilrippen aufweisen, die durch Querrillen blockartig strukturiert sind, wobei die Querrillen laufstreifeninnenseitig innerhalb der jeweiligen Profilrippe in einem Abstand zur Umfangsrille, welche die Profilrippe laufstreifeninnenseitig begrenzt, enden.

Der aus der EP 3 230 086 B1 bekannte Fahrzeugluftreifen weist ebenfalls einen Laufstreifen mit einer schulterseitig verlaufenden Profilrippe auf, in welcher eine Vielzahl von in Umfangsrichtung voneinander beabstandeten Querrillen ausgebildet ist. Die profilrippeninnenseitigen Enden der Querrillen münden in Entwässerungsnuten ein, welche in Umfangsrichtung und innerhalb der Profilrippe verlaufen, eine Breite von 2,00 mm bis 4,00 mm und eine Tiefe von 1,50 mm bis 3,00 mm aufweisen. Die in Umfangsrichtung umlaufenden Entwässerungsnuten weisen ferner an ihren Verbindungsstellen zu den Querrillen ihre größte Breite auf, um die Ableitung von Wasser über die Querrillen hindurch zu verbessern.

Darüber hinaus sind, beispielsweise aus der EP 2 080 643 B1, Fahrzeugluftreifen mit Laufstreifen bekannt, bei welchen in Umfangsrichtung bogenförmig verlaufende schmale Rillen vorhanden sind, die in Umfangsrillen und ineinander einmünden.

Der Erfindung liegt die Aufgabe zugrunde, bei einem Reifen der eingangs genannten Art die Nässeperformance, insbesondere den Nassgriff und die Traktion auf nassem Untergrund, unter Bedachtnahme auf die für gute Handlingeigenschaften und das Abriebverhalten erforderliche Stabilität der Profilrippe zu verbessern.

Gelöst wird die gestellte Aufgabe erfindungsgemäß dadurch, dass die bogenförmigen Einschnitte mit einem in Umfangsrichtung ermittelten gegenseitigen Abstand ihrer Enden von 1,50 mm bis 3,00 mm aneinandergereiht sind, wobei die bogenförmigen Einschnitte keine Verbindungen zu sonstigen Rillen oder Einschnitten aufweisen.

Diese bogenförmigen Einschnitte stellen durch ihre ausgewogene Bogenform in Umfangsrichtung und in Querrichtung wirkende Kanten zur Verfügung, die sowohl bei Geradeausfahrt als auch beim Kurvenfahren eine verbesserte Nässetraktion bewirken. Der geringe gegenseitige Abstand der aneinandergereihten Einschnitte ist ebenfalls für eine gute Nässeperformance vorteilhaft und sorgt für eine ausgewogene Stabilität der Profilrippe ohne diese aufzuweichen und für einen gleichmäßigen Abrieb. Für die Stabilität der Profilrippe ist es ferner vorteilhaft, wenn die bogenförmigen Einschnitte keine Verbindungen zu sonstigen Rillen oder Einschnitten aufweisen.

Bei einer bevorzugten Ausführung weisen die bogenförmigen Einschnitte eine symmetrische Bogenform auf, sodass die maximale Auslenkung des Bogens in der Bogenmitte vorliegt. Symmetrisch gestaltete Einschnitte haben einen besonders ausgewogenen Einfluss auf die Stabilität der Profilrippe.

Bei einem Fahrzeugluftreifen, bei welchem die Querrillen in der Profilrippe gemäß einer Pitchlängenvariation unter Bildung von Pitches unterschiedlicher Umfangslängen angeordnet sind, ist es von besonderem Vorteil, wenn die bogenförmigen Einschnitte jeweils zumindest eine Pitchlänge überspannen, derart, dass ihre Erstreckungslänge mit der bzw. den jeweiligen Pitchlänge(n) weitgehend korreliert. Insbesondere überspannen die bogenförmigen Einschnitte jeweils genau eine Pitchlänge. Eine derartige Anordnung der bogenförmigen Einschnitte ist zusätzlich für das Abrollgeräusch von Vorteil.

Für eine ausgewogene Steifigkeit der Profilrippe ist es vorteilhaft, wenn die bogenförmigen Einschnitte eine Erstreckungslänge von 30,00 mm bis 60,00 mm aufweisen.

Eine weitere, für die Stabilität der Profilrippe vorteilhafte Maßnahme besteht darin, dass die Enden der bogenförmigen Einschnitte zur benachbarten Randkante der Umfangsrille, in axialer Richtung ermittelt, einen Abstand aufweisen, welcher 5,00 mm bis 7,00 mm beträgt.

Die Ausgestaltung der bogenförmigen Einschnitte ist bevorzugt derart, dass sie einen U-förmigen Querschnitt mit einem gerundeten Einschnittgrund aufweisen, ferner eine über ihren Verlauf insbesondere konstante Tiefe von 1,20 mm bis 2,00 mm und eine über ihren Verlauf insbesondere konstante Breite von 0,60 mm bis 1,20 mm besitzen.

Mit bogenförmigen Einschnitten versehene Profilrippen sind insbesondere schulterseitige Profilrippen, um eine hohe Stabilität des Laufstreifens zur Unterstützung guter Handlingeigenschaften zu erzielen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf einen Umfangsabschnitt einer schulterseitigen Profilrippe eines Laufstreifens eines Fahrzeugluftreifens und
Fig. 2 einen vergrößerten Schnitt entlang der Linie II-II der Fig. 1.

Gemäß der Erfindung ausgeführte Fahrzeugluftreifen sind insbesondere Fahrzeugluftreifen in Radialbauart für Kraftfahrzeuge, vorzugsweise für Personenkraftwagen oder Light-Trucks.

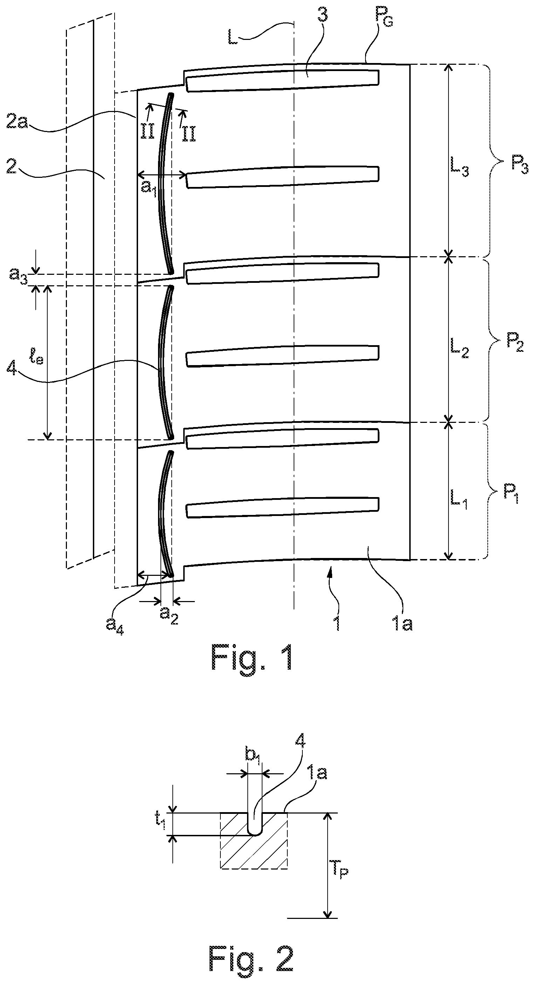

Fig. 1 zeigt beispielhaft einen Umfangsabschnitt einer über den Umfang eines Laufstreifens eines Fahrzeugluftreifens verlaufenden schulterseitigen Profilrippe 1, welche ein Außenfläche 1a aufweist. Die schulterseitige Profilrippe 1 ist laufstreifeninnenseitig von einer in Umfangsrichtung und beim gezeigten Beispiel gerade umlaufenden Umfangsrille 2 mit Randkanten 2a an der Außenfläche 1a begrenzt, deren Tiefe der vorgesehenen Profiltiefe T_{P} (Fig. 2, größte Tiefe der tiefsten Rille im Neuzustand des Reifens) entspricht, die bei Reifen für Personenkraftwagen in der Größenordnung von 6,00 mm bis 8,50 mm beträgt. An die Umfangsrille 2 schließt beispielsweise eine weitere Profilrippe oder eine Profilblockreihe an, die lediglich angedeutet ist. Alternativ ist die Profilrippe 1 eine im mittleren Bereich des Laufstreifens verlaufende Profilrippe, die an beiden Seiten von einer Umfangsrille begrenzt ist. Die in Fig. 1 mit L bezeichnete Linie kennzeichnet den seitlichen Rand der Bodenaufstandsfläche des Reifens, ermittelt als seitlicher Rand des statischen Footprints bei einem unter Nenndruck gesetztem Reifen. Die Profilrippe 1 ist durch eine Vielzahl von Querrillen 3, die sämtlich in einem in axialer Richtung ermittelten, Abstand a₁ von 4,00 mm bis 15,00 mm vor der dem seitlichen Rand der Bodenaufstandsfläche (Linie L) zugewandten Randkante 2a der Umfangsrille 2 enden, blockartig gegliedert.

Die Querrillen 3 verlaufen bei der gezeigten Ausführung geradlinig oder nahezu geradlinig, parallel oder weitgehend parallel zueinander, ferner in axialer Richtung und über den seitlichen Rand der Bodenaufstandsfläche (Linie L) hinaus. Die Querrillen 3 können sich auch unter einem Winkel von bis zu 45° zur axialen Richtung erstrecken. Bei der gezeigten Ausführung weisen ferner die Querrillen 3 über ihre Erstreckung eine weitgehend konstante Breite zwischen ihren Randkanten an der Außenfläche 1a der Profilrippe 1 auf, die insbesondere 2,00 mm bis 4,00 mm beträgt. Die Tiefe der Querrillen 3 beträgt in ihrem Verlauf innerhalb der Bodenaufstandsfläche vorzugsweise mindestens 40 % der Profiltiefe T_{P}. Außerhalb der Bodenaufstandsfläche laufen die Querrillen 3 unter kontinuierlicher Verringerung ihrer Tiefe aus.

Die Profilrippe 1 ist gemäß einem Verfahren der Pitchlängenvariation geräuschoptimiert, sodass, in der Umfangsrichtung betrachtet, die gegenseitigen Abstände der Querrillen 3 variieren. In Fig. 1 sind beispielhaft drei Pitches P₁, P₂, P₃ unterschiedlicher Umfangslängen L₁ (kürzeste Umfangslänge), L₂, L₃ (größte Umfangslänge), jeweils entlang der Linie L ermittelt, gezeigt, mit zugehörigen Pitchgrenzen, den mit P_{G} bezeichneten Linien. Beim dargestellten Beispiel gehören zu jedem Pitch P₁, P₂, P₃ jeweils zwei in Umfangsrichtung aufeinander folgende Querrillen 3, wobei sich je eine dieser Querrillen 3 im mittleren Bereich des jeweiligen Pitch befindet.

Zwischen der die Profilrippe 1 laufstreifeninnenseitig begrenzenden Randkante 2a der Umfangsrille 2 und den in übereinstimmenden Abständen a₁ vor dieser Randkante 2a endenden Querrillen 3 ist eine in Umfangsrichtung umlaufende Reihe von jeweils insgesamt bogenförmig (durchgehend gebogen) verlaufenden Einschnitten 4 ausgebildet. Die Einschnitte 4 weisen eine in die Umfangsrichtung projizierte Erstreckungslänge Iₑ von 30,00 mm bis 100,00 mm auf und können unabhängig von der Position der Querrillen 3 mit weitgehend gleichen Erstreckungslängen Iₑ oder variierenden Erstreckungslängen Iₑ aneinandergereiht sein. Bei bevorzugten Ausführungen sind die Erstreckungslängen Iₑ an die Positionen der Querrillen 3 angepasst, sodass beispielsweise und wie in Fig. 1 gezeigt ist, die bogenförmig verlaufenden Einschnitte 4 jeweils einen Pitch P₁, P₂, P₃ überspannen, derart, dass sich die Bogenmitte jeweils bei der im mittleren Bereich des betreffendes Pitches P₁, P₂, P₃ verlaufenden Querrille 3 befindet und die Einschnitte 4 jeweils in unmittelbarer Nähe der auf diese Querrille 3 unmittelbar folgenden Querrillen 3 enden.

Die Bogenform der Einschnitte 4 ist bezüglich der Bogenmitte bevorzugt symmetrisch und derart, dass die in Fig. 1 gestrichelt eingezeichneten Bogensehnen den Querrillen 3 bzw. dem seitlichen Rand der Bodenaufstandsfläche (Linie L) und die Wölbungen der Umfangsrille 2 zugewandt sind. Im Bereich der Bogenmitte befindet sich jeweils die Stelle mit der größten Auslenkung als Abstand a₂ zwischen der Mittellinie des Einschnittes 4 und der Bogensehne und im rechten Winkel zur Bogensehne, wobei der Abstand a₂ 2,00 mm bis 6,00 mm beträgt.

Die Enden der in Umfangsrichtung aufeinanderfolgenden Einschnitte 4 befinden sich zueinander unter Abständen a₃ von 1,50 mm bis 3,00 mm. Die Enden der bogenförmigen Einschnitte 4 weisen zur benachbarten Randkante 2a der Umfangsrille 2, in axialer Richtung ermittelt, einen Abstand a₄ auf, welcher 5,00 mm bis 7,00 mm beträgt.

Wie die Schnittdarstellung in Fig. 2 zeigt, weisen die bogenförmig verlaufenden Einschnitte 4 einen U-förmigen Querschnitt mit einen gerundeten Einschnittgrund auf. Die Einschnitte 4 besitzen eine über ihren Verlauf insbesondere konstante Tiefe t₁ von 1,20 mm bis 2,00 mm und eine Breite b₁, ermittelt an der Außenfläche 1a der Profilrippe 1, welche 0,60 mm bis 1,20 mm, insbesondere in der Größenordnung von 1,00 mm, beträgt.

### Bezugszeichenliste

- 1: Profilrippe
- 1a: Außenfläche
- 2: Umfangsrille
- 2a: Randkante
- 3: Querrille
- 4: Einschnitt
- a₁, a₂, a₃, a₄: Abstand
- b₁: Breite (Einschnitt)
- t₁: Tiefe (Einschnitt)
- L: Linie (seitlicher Rand der Bodenaufstandsfläche)
- lₑ: Erstreckungslänge
- L₁, L₂, L₃: Umfangslänge der Pitches
- T_{P}: Profiltiefe
- P₁, P₂, P₃: Pitch
- P_{G}: Pitchgrenze

## Patentansprüche

1. Fahrzeugluftreifen mit einem Laufstreifen mit zumindest einer in Umfangsrichtung umlaufenden, an zumindest einer Seite von einer Umfangsrille (2) begrenzten Profilrippe (1) mit einer an der Laufstreifenperipherie befindlichen Außenfläche (1a) und mit insbesondere parallel zueinander verlaufenden Querrillen (3), welche in einem Abstand vor der Umfangsrille (2) enden, wobei zwischen der Umfangsrille (2) und den Querrillen (3) eine Reihe von sich in Umfangsrichtung erstreckenden, in Draufsicht insgesamt bogenförmigen Einschnitten (4) verläuft, deren Wölbungen zur Umfangsrille (2) weisen, wobei die bogenförmigen Einschnitte (4) eine in die Umfangsrichtung projizierte Erstreckungslänge (lₑ) von 30,00 mm bis 100,00 mm sowie eine Bogenform mit einer maximalen Auslenkung (a₂) aufweisen, die bezogen auf die Bogensehne 2,00 mm bis 6,00 mm beträgt,
**dadurch gekennzeichnet,**
**dass** die bogenförmigen Einschnitte (4) mit einem in Umfangsrichtung ermittelten gegenseitigen Abstand (a₃) ihrer Enden von 1,50 mm bis 3,00 mm aneinandergereiht sind, wobei die bogenförmigen Einschnitte (4) keine Verbindungen zu sonstigen Rillen oder Einschnitten aufweisen.

2. Fahrzeugluftreifen nach Anspruch 1, **dadurch gekennzeichnet, dass** die bogenförmigen Einschnitte (4) eine symmetrische Bogenform aufweisen, sodass die maximale Auslenkung (a₂) des Bogens in der Bogenmitte vorliegt.

3. Fahrzeugluftreifen, bei welchem die Querrillen (3) in der Profilrippe (1) gemäß einer Pitchlängenvariation unter Bildung von Pitches (P₁, P₂, P₃) unterschiedlicher Pitchlängen (L₁, L₂, L₃) angeordnet sind, nach Anspruch 1 oder 2, **dadurch gekennzeichnet, dass** die bogenförmigen Einschnitte (4) jeweils zumindest einen Pitch (P₁, P₂, P₃) überspannen, derart, dass ihre Erstreckungslängen (lₑ) mit der/den jeweiligen Pitchlänge(n) (L₁, L₂, L₃) weitgehend korrelieren.

4. Fahrzeugluftreifen nach Anspruch 3, **dadurch gekennzeichnet, dass** die bogenförmigen Einschnitte (4) jeweils genau einen Pitch (P₁, P₂, P₃) überspannen.

5. Fahrzeugluftreifen nach einem oder mehreren der Ansprüche 1 bis 4, **dadurch gekennzeichnet, dass** die bogenförmigen Einschnitte (4) eine Erstreckungslänge (lₑ) von 30,00 mm bis 60,00 mm aufweisen.

6. Fahrzeugluftreifen nach einem oder mehreren der Ansprüche 1 bis 5, **dadurch gekennzeichnet, dass** die Enden der bogenförmigen Einschnitte (4) zur benachbarten Randkante (2a) der Umfangsrille (2), in axialer Richtung ermittelt, einen Abstand (a₄) aufweisen, welcher 5,00 mm bis 7,00 mm beträgt.

7. Fahrzeugluftreifen nach einem oder mehreren der Ansprüche 1 bis 6, **dadurch gekennzeichnet, dass** die bogenförmigen Einschnitte (4) einen U-förmigen Querschnitt mit einem gerundeten Einschnittgrund aufweisen.

8. Fahrzeugluftreifen nach einem oder mehreren der Ansprüche 1 bis 7, **dadurch gekennzeichnet, dass** die bogenförmigen Einschnitte (4) eine über ihren Verlauf insbesondere konstante Tiefe (t₁) von 1,20 mm bis 2,00 mm aufweisen.

9. Fahrzeugluftreifen nach einem oder mehreren der Ansprüche 1 bis 8, **dadurch gekennzeichnet, dass** die bogenförmigen Einschnitte (4) an der Außenfläche (1a) der Profilrippe (1) eine über ihren Verlauf insbesondere konstante Breite (b₁) von 0,60 mm bis 1,20 mm aufweisen.

10. Fahrzeugluftreifen nach einem oder mehreren der Ansprüche 1 bis 9, **dadurch gekennzeichnet, dass** die Profilrippe (1) eine schulterseitige Profilrippe (1) ist.

## Claims

1. Pneumatic vehicle tyre comprising a tread with at least one profile rib (1), which runs around in the circumferential direction, is delimited on at least one side by a circumferential groove (2) and has an outer surface (1a) located on the tread periphery, and with transverse grooves (3), which in particular run parallel to one another and end at a distance before the circumferential groove (2), while between the circumferential groove (2) and the transverse grooves (3) there run a series of circumferentially extending sipes (4), which in plan view are altogether of arcuate form and the curvatures of which are directed towards the circumferential groove (2), the arcuate sipes (4) having a length of extent (lₑ), projected in the circumferential direction, of 30.00 mm to 100.00 mm and an arc shape having a maximum deflection (a₂) of 2.00 mm to 6.00 mm with respect to the chord of the arc,
**characterized**
**in that** the arcuate sipes (4) are lined up together at a circumferentially determined mutual distance (a₃) of their ends of 1.50 mm to 3.00 mm, the arcuate sipes (4) not having any connections to other grooves or sipes.

2. Pneumatic vehicle tyre according to Claim 1, **characterized in that** the arcuate sipes (4) have a symmetrical arc shape such that the maximum deflection (a₂) of the arc is present in the centre of the arc.

3. Pneumatic vehicle tyre, in which the transverse grooves (3) in the profile rib (1) are arranged according to a variation in pitch length by forming pitches (P₁, P₂, P₃) of different pitch lengths (L₁, L₂, L₃), according to Claim 1 or 2, **characterized in that** the arcuate sipes (4) each span at least one pitch (P₁, P₂, P₃) in such a way that their lengths of extent (lₑ) largely correlate with the respective pitch length(s) (L₁, L₂, L₃).

4. Pneumatic vehicle tyre according to Claim 3, **characterized in that** the arcuate sipes (4) each span precisely one pitch (P₁, P₂, P₃).

5. Pneumatic vehicle tyre according to one or more of Claims 1 to **4, characterized in that** the arcuate sipes (4) have a length of extent (le) of 30.00 mm to 60.00 mm.

6. Pneumatic vehicle tyre according to one or more of Claims 1 to 5, **characterized in that** the ends of the arcuate sipes (4) are at a distance (a₄) of 5.00 mm to 7.00 mm from the adjacent border edge (2a) of the circumferential groove (2), as determined in the axial direction.

7. Pneumatic vehicle tyre according to one or more of Claims 1 to 6, **characterized in that** the arcuate sipes (4) have a U-shaped cross section with a rounded sipe base.

8. Pneumatic vehicle tyre according to one or more of Claims 1 to 7, **characterized in that** the arcuate sipes (4) have a depth (t₁), which is in particular constant over their course, of 1.20 mm to 2.00 mm.

9. Pneumatic vehicle tyre according to one or more of Claims 1 to 8, **characterized in that** the arcuate sipes (4) on the outer surface (1a) of the profile rib (1) have a width (b₁), which is in particular constant over their course, of 0.60 mm to 1.20 mm.

10. Pneumatic vehicle tyre according to one or more of Claims 1 to 9, **characterized in that** the profile rib (1) is a shoulder-side profile rib (1).

## Revendications

1. Pneumatique de véhicule, avec une bande de roulement avec au moins une nervure de profil (1) s'étendant dans la direction circonférentielle, délimitée sur au moins un côté par une rainure circonférentielle (2), avec une surface extérieure (1a) se trouvant à la périphérie de la bande de roulement et avec des rainures transversales (3) s'étendant notamment parallèlement les unes aux autres, qui se terminent à une distance devant la rainure circonférentielle (2), une série d'incisions (4) s'étendant dans la direction circonférentielle, globalement de forme arquée en vue de dessus, s'étendant entre la rainure circonférentielle (2) et les rainures transversales (3), dont les courbures sont orientées vers la rainure circonférentielle (2), les incisions de forme arquée (4) présentant une longueur d'extension (lₑ) projetée dans la direction circonférentielle de 30,00 mm à 100,00 mm ainsi qu'une forme arquée avec une déviation maximale (a₂) qui est de 2,00 mm à 6,00 mm par rapport à la corde de l'arc,
**caractérisé**
**en ce que** les incisions de forme arquée (4) sont alignées les unes à côté des autres avec un écartement mutuel (a₃) de leurs extrémités, déterminé dans la direction circonférentielle, de 1,50 mm à 3,00 mm, les incisions de forme arquée (4) ne présentant aucune liaison avec d'autres rainures ou incisions.

2. Pneumatique de véhicule selon la revendication 1, **caractérisé en ce que** les incisions de forme arquée (4) présentent une forme arquée symétrique, de telle sorte que la déviation maximale (a₂) de l'arc se situe au milieu de l'arc.

3. Pneumatique de véhicule, dans lequel les rainures transversales (3) sont agencées dans la nervure de profil (1) selon une variation de longueur de pas, en formant des pas (P₁, P₂, P₃) de différentes longueurs de pas (L₁, L₂, L₃), selon la revendication 1 ou 2, **caractérisé en ce que** les incisions de forme arquée (4) s'étendent chacune sur au moins un pas (P₁, P₂, P₃), de telle sorte que leurs longueurs d'extension (lₑ) correspondent largement à la ou aux longueurs de pas respectives (L₁, L₂, L₃).

4. Pneumatique de véhicule selon la revendication 3, **caractérisé en ce que** les incisions de forme arquée (4) s'étendent chacune exactement sur un pas (P₁, P₂, P₃).

5. Pneumatique de véhicule selon une ou plusieurs des revendications 1 à 4, **caractérisé en ce que** les incisions de forme arquée (4) présentent une longueur d'extension (le) de 30,00 mm à 60,00 mm.

6. Pneumatique de véhicule selon une ou plusieurs des revendications 1 à 5, **caractérisé en ce que** les extrémités des incisions de forme arquée (4) présentent par rapport au bord voisin (2a) de la rainure circonférentielle (2), déterminé dans la direction axiale, un écart (a₄) de 5,00 mm à 7,00 mm.

7. Pneumatique de véhicule selon une ou plusieurs des revendications 1 à 6, **caractérisé en ce que** les incisions de forme arquée (4) présentent une section transversale en forme de U avec une base d'incision arrondie.

8. Pneumatique de véhicule selon une ou plusieurs des revendications 1 à 7, **caractérisé en ce que** les incisions de forme arquée (4) présentent une profondeur (t₁) constante sur toute leur extension, de 1,20 mm à 2,00 mm.

9. Pneumatique de véhicule selon une ou plusieurs des revendications 1 à 8, **caractérisé en ce que** les incisions de forme arquée (4) présentent sur la surface extérieure (1a) de la nervure de profil (1) une largeur (b₁) constante sur toute leur extension, de 0,60 mm à 1,20 mm.

10. Pneumatique de véhicule selon une ou plusieurs des revendications 1 à 9, **caractérisé en ce que** la nervure de profil (1) est une nervure de profil (1) côté épaulement.
